Europäisches Patentamt

(19) European Patent Office

Office européen des brevets

(11) Publication number: **0 169 663**
**A1**

(12) # EUROPEAN PATENT APPLICATION

(21) Application number: **85304408.9**

(22) Date of filing: **20.06.85**

(51) Int. Cl.⁴: **A 01 N 61/00**
**A 01 N 3/00**

(30) Priority: **23.06.84 GB 8416106**
**04.07.84 GB 8416961**

(43) Date of publication of application:
**29.01.86 Bulletin 86/5**

(84) Designated Contracting States:
**AT BE CH DE FR GB IT LI LU NL SE**

(71) Applicant: **Sampson, Michael James**
**18 Christchurch Road Norwich**
**Norfolk(GB)**

(71) Applicant: **Hutchings, Neville**
**The Station**
**Edwinstowe Mansfield Nottinghamshire NG21 9HT(GB)**

(72) Inventor: **Sampson, Michael James**
**18 Christchurch Road Norwich**
**Norfolk(GB)**

(72) Inventor: **Hutchings, Neville**
**The Station**
**Edwinstowe Mansfield Nottinghamshire NG21 9HT(GB)**

(74) Representative: **Crampton, Keith John Allen et al,**
**D YOUNG & CO 10 Staple Inn**
**London WC1V 7RD(GB)**

(54) **Prevention of plant damage by environmental hazards.**

(57) A method for the prevention or reduction of damage to vegetation by acidic and other toxic contamination in the atmosphere comprises applying to the vegetation a coating agent that acts as a protective unidirectionally permeable membrane allowing the vegetation to breathe but not to absorb contaminants that are either gaseous or that are dissolved in atmospheric water.

EP 0 169 663 A1

1

# PREVENTION OF PLANT DAMAGE BY ENVIRONMENTAL HAZARDS

This invention is concerned with the prevention of plant damage by environmental hazards. So-called "acid rain" has received wide publicity over the past few years, and the counteraction of the effect on plants of acid materials in the atmosphere and of the effect of ultraviolet light, particularly in cases where one effect accentuates the other, is both ecologically sound and environmentally desirable.

U.K. Patent No. GB 2 030 452-B discloses and claims a method of applying certain plant-growth regulators in conjunction with a smaller amount of an additive that occurs naturally in the cells of living organisms and that modifies the metabolism of plants. in order to enhace the effect of the plant-growth regulator, the additive being applied not more than 15 days before or after the plant-growth regulator, in which the additive is glucose, hydrolysed starch, sucrose, fructose, glycerol, glyceraldehyde, erythrose, ribulose, xylulose or arabinose or an ester or glycoside or metabolic equivalent of such a carbohydrate, an acid of the Krebs Tricarboxylic Acid Cycle or a metabolic precursor thereof, a vitamin or coenzyme, a purine or pyrimidine nucleoside or nucleotide or a precursor thereof, a naturally occurring fat or oil, or an amino acid. Compositions containing the two ingredients are also disclosed and claimed. Insecticides, nematicides, fungicides and herbicides may also be applied in conjunction with the additive in order to enhance their effect.

U.K. Patent No. GB-2 063 235-B discloses and claims a method for the prevention or reduction of loss of seeds by splitting of seed-bearing bodies of plants, comprising applying to the plants, not more than fifteen days before the crop is ready for harvesting, a coating or layering substance that acts as a semi-permeable membrane allowing water from the seed-bearing bodies to be lost but not substantially reabsorbed. The preferred substance is a mixture containing di-1-$\underline{p}$-menthene and certain of its polymers. Other monoterpenes ($C_{10}H_{16}$) can also be used. The agents can be used in admixture with one another.

Apart from monoterpenes, the following compounds are suitable, though this is not an exhaustive list:-

1. Terpene hydrocarbons of the elementary composition $C_{15}H_{24}$ (sesquiterpenes)

2. Terpene hydrocarbons of the elementary composition $C_{20}H_{32}$ (diterpenes)

3. Terpene hydrocarbons of the elementary composition $C_{30}H_{48}$ (triterpenes)

4. Terpenes having 40 carbon atoms (tetraterpenes)

5. Bicyclic and tricyclic monoterpenes and their derivatives (e.g. oxygenated derivatives) such as and pinene, d-camphor, d-borneol, d-tanacetone, ß-thujone, d- $\Delta^3$-carene

6. Terpene resins (compounded with or without natural or synthetic rubbers)

7. Gum turpentine

8. Sulphate of turpentine

9. Wood turpentine

10. Pine oils

11. Terpineols

12. Non-oxidizing Alkyd Resins, e.g. those of the castor oil. coconut oil, hydrogenated castor oil, lauric acid, oil-free, saturated acid and synthetic fatty acid types

13. Oxidizing Alkyd Resins, e.g. acrylic-resin-modified dehydrated castor oil types, epoxide-resin-modified, isophthalic-acid-based types. linoleic-rich oil type, linseed oil types, linseed oil/dehydrated castor oil types, linseed oil/soya bean oil types, linseed oil/tung oil types, maleic-resin-modified, marine oil types, phenolic-resin-modified, rosin-modified, safflower seed oil types, silicone-resin-modified, soya bean oil types, soya bean oil/tung oil types, styrenated types, sunflowerseed oil types, tall oil types, tobaccoseed oil types, unmodified types, vinyltoluene-modified types and water-soluble types

14. Benzoguanamine resins

15. Styrene polymers and copolymers, e.g. polystyrene and styrene/maleic anhydride and butadiene/styrene copolymer resins

16. Carbamide resins

17. Copal ester resins

18. Coumarone-indene resins

19.    Cresylic resins

20.    Epoxy resins - e.g. dehydrated castor oil types, linseed oil types, linseed oil/rosin types, phenolic-resin-modified, soya bean oil types, styrenated types, vinyltoluene-modified, and unmodified types as well as those sold under the trade marks Epikote 205, Epikote 825, Epikote 828 and Epikote 1001

21.    Epoxide melamine condensates

22.    Epoxide phenolic condensates

23.    Ester gums

24.    Fumaric resins

25.    Furan resins

26.    Ketone resins

27.    Maleic resins

28.    Melamine resins - e.g. butylated types, hexamethoxymethyl types and formaldehyde condensates

29.    Metallic rosinates - e.g. calcium or zinc resinates, zinc/calcium mixtures both rosin or modified rosin

30.    Phenolic resins and modified phenolic resins - e.g. phenol/aldehyde resole condensates adducted to rosin or modified rosin, as well as phenol/formaldehyde resins

31.    Phenoxy resins

32.    Polybutadiene resins

33.    Polybutene resins

34.    Polycarbonate resins

35.    Polyisobutylene resins

36.    Polyester resins - e.g. polyacrylate and polymethacrylate ester resins

37.    Polysulphide resins

38.    Polyurethane resins - e.g. modified types and oil-modified types

39.    Polyvinyl acetal resins

40.    Polyether resins - e.g. polyvinyl ether resins

41.    Polyvinyl formal resins

42.    Rosin derivatives - e.g. esters of rosin, copal, rosin acids or rosin modified by hydrogenation, polymerization isomerization or disproportionation with glycerol, pentaerythritol or other polyhydric alcohols

43.    Maleic/fumaric condensate resins - e.g. maleic or fumaric acid/anhydride adducts on rosin or modified rosins, their esters with glycerol, pentaerythritol or other polyhydric alcohols

44. Silicone resins and polymers

45. Urea resins - e.g. urea-formaldehyde

46. Xylene-formaldehyde resins

47. Natural gums/resins - e.g. accoroides, arabic, benzoin, copals, damar, elemi, gamboge, karaya, mastic, rosin, sandarac, shellac and tragacanth

48. Acrylic polymers and copolymers - e.g. polyacrylic acid, polyacrylamide, polyacrylonitrile, poly(methyl methacrylate) and poly(ethyl acrylate/butyl acrylate)

49. Cellulose ethers - e.g. hydroxyethyl cellulose and sodium carboxymethyl cellulose

50. Cellulose esters - e.g. methyl cellulose

51. Hydrocarbon resins - e.g. petroleum resins

52. Polyamide resins

53. Rubbers - e.g. natural rubber, butyl, rubber, nitrile rubber, polychloroprene, rubber/oil emuline and polyurethane rubber and cyclized rubber resins

54. Vinyl polymers and copolymers other than those already mentioned - e.g. poly(vinyl acetate), poly(vinyl alcohol), poly(vinyl butyral), poly(vinyl pyrrolidone), poly(vinyl acetate/vinyl chloride) and poly(vinyl acetate/acrylate) and

55. Natural drying oils, with or without metal accelerators - e.g. linseed oil and tung oil and mixtures of them.

The present invention is based on the discovery that coating substances of the above type can be used to reduce the damage to vegetation, particularly to the leaves of deciduous and evergreen trees and shrubs, resulting from exposure to toxic gases or particulate toxic material, the deposition on them of rain contaminated by acid, or other toxic contaminants either before or after these contaminants have been affected by ultraviolet light and/or atmospheric ozone. Such contaminants include sulphurous and sulphuric acids, dissolved sulphur dioxide, nitrous and nitric acids, and other toxic gases and particulate matter produced from power stations, industrial plants and the exhaust fumes of cars and other motor vehicles. In the case of trees growing at high elevations the effect of ultraviolet light and ozone on such gases may be such as to substantially increase their toxic properties to vegetation.

In accordance with the present invention, a method for the prevention or reduction of damage to vegetation by acidic and other toxic contamination in the atmosphere comprises applying to the vegetation a coating agent that may act as a protective preferentially unidirectionally permeable membrane allowing the vegetation to breathe but not to absorb toxic gases or atmospheric water and contaminants dissolved in it. Vegetation that can be protected in accordance with the invention includes trees, shrubs and herbaceous plants.

The substance may be applied during growth or dormancy of the vegetation. During dormancy or other periods of restricted growth the coating material may be used at levels giving a higher degree of protection but giving a much greater reduction in the uptake of carbon dioxide and reduction in transpiration.

The additives disclosed in U. K. Patent GB-2 030 452 B can be used in conjunction with the coating agent in order to encourage resistance to and/or recovery from damage from the atmospheric pollutants mentioned. Such of those additives as are basic in character, for example the amino acids asparagine and glutamine, are of especial value in neutralizing the effects of acidity. Amino acids containing more than one amino group per carboxy group are particularly suitable. Other substances such as calcium or magnesium carbonate or hydroxide and other buffers and alkalis may be used to neutralize acidity and combined in the coating agent, but in the case of calcium compounds care is required in view of the lime-hating nature of certain shrubs.

The coating agent along with the additives described herein may also be used in conjunction with plant hormones (synthetic or natural) to counter senescence and other tissue degradation induced by atmospheric pollution. These may include 1,3-diphenylurea, N-(phenylmethyl)-9-(tetrahydro-2H-pyran-2-yl)-9H-purin-6-amine, extracts of seaweed, and other natural plant extracts containing cytokinin activity. Such preparations may be applied by spraying from the ground but may more usefully be applied by spraying from aircraft.

Because of the weakened condition of the vegetation it will be more susceptible to fungal and insect attack. It may therefore be beneficial to include an insecticide and/or fungicide with the coating agent.

The damage caused by such toxic gases or vapours to vegetation exposed to them may be exacerbated where the plant has suffered previous ultraviolet light damage or where initial damage by the said toxic gases or vapours results in damage by ultraviolet light that would otherwise not have taken place or would have been significantly less.    Such ultraviolet light damage is likely to be more severe where the vegetation is exposed to high levels of ultraviolet irradiation, e.g. where it is growing at high altitudes.

The coating agents described above, especially those based on pinenene, terpenes and di-1-p-menthene and its polymers act to reduce ultraviolet light and hence may act as a sun-screen or ultraviolet filter to the leaf.    This effect may be further enhanced by adding to the coating material or using in its place a chemical known to screen out ultraviolet irradiation.    Such chemicals include but are not limited to pine oils, oils of plants such as lemon, olive, coconut and jujuba;  substances such as borneol, limonene and terpineol;  cinnamic acid, hydroxy-cinnamic acid and benzoic acid and the salts of these acids;  and pigments and substances that absorb strongly at wavelengths below 350 Angstroms (35μm).

Free-radical formation from atmosphere pollutants is an additional hazard to plants.    Photosynthetic electron flow reduces oxides of nitrogen to form a free radical, and this is converted back to the oxide of nitrogen, with concomitant formation of hydrogen peroxide, by re-oxidation by molecular (atmospheric) oxygen.    The hydrogen peroxide is the damaging agent and the reaction producing it can be very rapid, especially in bright sunshine.    It can however be slowed by providing an alternative oxidation/reduction system.    Thus the use of oxidized glutathione (GSSG) will reoxidize the free radical to the original nitrogen oxide with formation of reduced glutathione (GSH) but no hydrogen peroxide is formed.

One such system is the enzymic re-oxidation of reduced glutathione in conjunction with nicotine adenine dinucleotide phosphate (NADP), which may be stimulated by the use of an NADP precursor such as nicotinamide or nicotinic acid, and a further system is that of ascorbic acid/dehydroascorbic acid catalysed by the enzyme ascorbic acid oxidase, which may be stimulated by the use of ascorbic acid.    Ascorbic acid is initially added and converted in the plant to dehydroascorbic acid (5) below.    The reactions that take place with NO and GSSG are thus:

$$NO \text{ ion} \xrightarrow{\text{light}} \text{reduced free radical} + \tfrac{1}{2}O_2 \qquad (1)$$

$$\text{reduced free radical} + O_2 + H_2O \longrightarrow NO \text{ ion} + H_2O_2 \qquad (2)$$

$$\text{reduced free radical} + GSSG \longrightarrow NO \text{ ion} + GSH \qquad (3)$$

$$GSH + \text{dehydroascorbic acid} \longrightarrow \text{ascorbic acid} + GSSG \qquad (4)$$

$$\text{Ascorbic acid} \xrightarrow[\substack{\text{ascorbic acid} \\ \text{oxidase}}]{\text{oxygen}} \text{Dehydroascorbic acid} \qquad (5)$$

Thus the formation of hydrogen peroxide is slowed down and reaction (2) can be eliminated almost completely by using sufficient amounts of the GSSG and ascorbic acid.

The following Example shows how coniferous trees may be protected for toxic acidic atmospheric pollutants by application of a coating in accordance with the invention.

## EXAMPLE

Eight plants of each of the species sitka spruce (Picea sitchensis), Norway spruce (Picea abies) and red spruce (Picea rubens), were divided randomly into two groups. Half the plants of each species were coated using a mixture containing: water (1790 g), di-1-p-menthene (180 g) and alkyl phenol ethylene oxide condensate (30 g). Three days after coating, all 24 plants were placed in a single fumigation chamber in which the coated and uncoated plants were grown for two weeks in eight-hour days at photon flux densities of 250 µmole E. $m^{-2}$ $s^{-1}$ P.A.R. with temperatures of 18 °C/10 °C day/night. After one week the plants were exposed for 8 hours to 8 ppm $SO_2$ for one light period and this exposure was repeated one week later.

Results

No visible injury occurred to the plants after the first day of exposure but needle blemishes developed gradually over the four days after the second exposure. The percentages of needles showing injury of any degree were counted. Four days after the second exposure at 8 ppm $SO_2$ the mean numbers of needles damaged $\pm$ standard errors on the coated and uncoated plants were as follows:

| sitka spruce: | uncoated = $1.75 \pm 0.96\%$ | coated = $0.25 \pm 0.50\%$ |
| red spruce: | uncoated = $70 \pm 3.5\%$ | coated = $2.25 \pm 0.50\%$ |
| Norway spruce: | uncoated = $85 \pm 2.4\%$ | coated = $2.75 \pm 1.26\%$ |

These results indicate that damage is substantially reduced by application of a coating in accordance with the invention.

## CLAIMS

1.      A method for the prevention or reduction of damage to vegetation by acidic and other toxic contamination in the atmosphere that comprises applying to the vegetation a coating agent that acts as a protective membrane restricting the uptake of contaminants that are either gaseous or that are dissolved in atmospheric water.

2.      A method as claimed in Claim 1 in which the coating agent is applied in conjunction with an additive that occurs naturally in the cells of living organisms and that modifies the metabolism of plants.

3.      A method as claimed in Claim 1 or 2 in which the coating agent is applied in conjunction with a basic substance.

4.      A method as claimed in Claim 3 in which the basic substance is an amino acid, calcium or magnesium carbonate or calcium or magnesium hydroxide or a buffer substance or alkali.

5.      A method as claimed in any preceding claim in which the coating agent is applied in conjunction with a natural or synthetic plant hormone.

6.      A method as claimed in any preceding claim in which the coating agent is applied in conjunction with a fungicide and/or insecticide.

7.      A method as claimed in any preceding claim in which the coating agent is applied in conjunction with a chemical known to screen out ultraviolet radiation.

8.      A method as claimed in Claim 7 in which the chemical is a pine oil, lemon oil, olive oil, coconut oil, jujuba oil, borneol, limonene, terpineol, cinnamic or hydroxycinnamic or benzoic acid or a salt thereof, or a pigment that absorbs strongly at wavelengths below 35 μm.

9.      A modification of a method as claimed in Claim 7 or 8 in which the said chemical replaces the coating agent.

10.   A coating agent that acts as a protective preferentially unidirectionally permeable membrane allowing vegetation to breathe but not to absorb atmospheric water and contaminants dissolved in it or gaseous toxic materials, for use in applying to vegetation to prevent or reduce damage to it by acidic and other toxic atmospheric contamination.

11.   A coating agent that acts as a barrier to the uptake by vegetation of atmospheric gases both toxic and non-toxic for use in applying to vegetation during periods of restricted growth as for instance during winter months to prevent or reduce damage to it by acidic and other toxic atmospheric contamination.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | EP-A-0 044 224 (M.J.SAMPSON)<br><br>* The whole document *<br><br>--- | 1-5,8-11 | A 01 N    61/00<br>A 01 N     3/00 |
| X | CHEMICAL ABSTRACTS, vol. 93, no. 13, 29th September 1980, page 184, no. 126991n, Columbus, Ohio, US; H.HONDA: "Effects of plant covering materials in reducing the air pollution damage of the plants" & KANKYO KAGAKU KENKYU HOKOKU (CHIBA DAIGAKU) 1977-1978 (PUB. 1979). 4, 48-54<br>* Abstract *<br><br>--- | 1,10,11 | |
| D,X | EP-A-0 027 344 (N.HUTCHINGS et al.)<br>* Page 2, line 6 - page 5, line 20; page 7, line 25 - page 8, line 12; page 9, lines 17-19 *<br><br>--- | 1,6,8-11 | TECHNICAL FIELDS SEARCHED (Int Cl 4) |
| A | AU-B- 60 281 (C.F.DEZONG et al.)(1980)<br><br>* Page 5, line 27 - page 6, line 19; page 8, lines 8-17; page 11, line 4 - page 12, line 5; page 12, lines 17-24; claims *<br><br>----- | 1,3,4,6-8,10,11 | A 01 N |

The present search report has been drawn up for all claims

| Place of search | Date of completion of the search | Examiner |
|---|---|---|
| THE HAGUE | 27-09-1985 | FLETCHER A.S. |